(19) **Europäisches Patentamt**
**European Patent Office**
**Office européen des brevets**

(11) **EP 1 988 391 B1**

(12) **EUROPÄISCHE PATENTSCHRIFT**

(45) Veröffentlichungstag und Bekanntmachung des Hinweises auf die Patenterteilung:
**18.06.2014   Patentblatt 2014/25**

(51) Int Cl.:
***G01N 29/04*** *(2006.01)*

(21) Anmeldenummer: **08153755.7**

(22) Anmeldetag: **31.03.2008**

(54) **Verfahren zur Ermittlung der Schaufelverstimmung bei Laufrädern in Integralbauweise**

Method for determining blade mistuning on integrally manufactured rotor wheels

Amortisseur de vibrations, en particulier amortisseurs de direction

(84) Benannte Vertragsstaaten:
**DE FR GB**

(30) Priorität: **03.04.2007   DE 102007016369**

(43) Veröffentlichungstag der Anmeldung:
**05.11.2008   Patentblatt 2008/45**

(73) Patentinhaber: **Rolls-Royce Deutschland Ltd & Co KG**
**15827 Blankenfelde-Mahlow (DE)**
Benannte Vertragsstaaten:
**DE FR GB**

(72) Erfinder:
- **Kühhorn, Arnold Prof. Dr.**
**10715, Berlin (DE)**
- **Beirow, Bernd**
**03048, Cottbus (DE)**

(56) Entgegenhaltungen:
**EP-A1- 1 589 191     US-A1- 2004 243 310**

- **Ibrahim Ata Sever: "EXPERIMENTAL VALIDATION OF TURBOMACHINERY BLADE VIBRATION PREDICTIONS, PhD thesis", Department of Mechanical Engineering Imperial College London , 1. März 2004 (2004-03-01), XP055077240, Gefunden im Internet: URL:http://www3.imperial.ac.uk/pls/portall ive/docs/1/40373698.PDF [gefunden am 2013-08-30]**
- **MERCADAL M ET AL: "Damage identification by NSMS blade resonance tracking in mistuned rotors", AEROSPACE CONFERENCE, 2001, IEEE PROCEEDINGS. MAR. 10-17, 2001', PISCATAWAY, NJ, USA,IEEE, PISCATAWAY, NJ, USA, Bd. 7, 10. März 2001 (2001-03-10), Seiten 3263-3277, XP010548445, ISBN: 978-0-7803-6599-5**

**Beschreibung**

Die Erfindung betrifft ein Verfahren zur Ermittlung der Schaufelverstimmung bei in Integralbauweise hergestellten Laufrädern für Verdichter und Turbinen, insbesondere für Gasturbinentriebwerke, bei dem die einzelnen Schaufeln nacheinander in jeweils von den übrigen Schaufeln weitgehend entkoppeltem Zustand mittels Impulserregung erregt und dabei die Schwingungsantwort der betreffenden Schaufel gemessen wird.

In der Verdichter- und Turbinentechnik und insbesondere bei Flugtriebwerken werden zunehmend in einem Stück gefertigte Laufräder, so genannte BLISKs, eingesetzt. Gegenüber der konventionellen Bauweise lassen die einstückig ausgebildeten Laufräder höhere Rotationsgeschwindigkeiten zu, so dass ein verbessertes Druckverhältnis erzielt werden kann und damit leistungsfähigere Triebwerke zur Verfügung stehen. In Integralbauweise gefertigte Laufräder werden zunehmend auch außerhalb der Luftfahrttechnik bei Verdichtern und Turbinen eingesetzt. Aufgrund der einstückigen Ausbildung sind jedoch fertigungsbedingte Störungen der Rotationssymmetrie, das heißt eine Verstimmung der Gesamtstruktur zu verzeichnen. Diese auch als "Mistuning" bezeichnete Besonderheit von Laufrädern in BLISK-Bauweise, die sich in spezifischen Schaufeleigenfrequenzen widerspiegelt, ist infolge aerodynamischer Anregungen mit Schwingungsamplituden- und Spannungsüberhöhungen in den Schaufeln und daraus resultierenden, die Lebensdauer des Laufrades einschränkenden Ermüdungserscheinungen verbunden. Durch eine - möglichst realitätsnahe - Bestimmung der Schaufeleigenfrequenzen ist es daher möglich, fertigungsbedingte Störungen der Rotationssymmetrie des Laufrades, das heißt Verstimmungen (Mistuning) der Gesamtstruktur, zu erkennen und entsprechende Aussagen über die Qualität der betreffenden BLISK im Hinblick auf deren Schwingungsverhalten unter Betriebsbedingungen sowie deren Betriebssicherheit und Lebensdauer zu treffen.

In der US 7 082 371 B2 wird ein Verfahren zur Bestimmung des Mistuning von rotierenden Schaufelstrukturen und insbesondere zur Vorhersage des Schwingungsverhaltens von in Integralbauweise hergestellten Laufrädern (BLISKs) von Gasturbinen beschrieben. Eine Software kann normale Moden und Eigenfrequenzen der BLISK beschreiben, und zwar unter Verwendung abgestimmter Systemfrequenzen und des Frequenzmistuning jeder Schaufel/jedes Scheibensektors. Bei diesem unter der Bezeichnung FFM (Fundamental Mistuning model) bekannten Verfahren werden zur Bestimmung von Sektorfrequenzen als auch von abgestimmten Systemfrequenzen normale, das heißt nicht abgestimmte Moden und Eigenfrequenzen der betreffenden BLISK genutzt. Das FMM-Verfahren kann voraussagen, wie stark die BLISK während der Rotation unter Betriebbedingungen vibrieren wird. Das verfahren umfasst das Beschaffen von Nennfrequenzen eines abgestimmten BLISK-Systems, die Messung von mindestens einer nicht abgestimmten Wellenform und die Berechnung des Mistuning von mindestens einer Schaufel der BLISK aus den Sollfrequenzen und der mindestens einen nicht abgestimmten Wellenform und der Eigenfrequenz. Die für die Berechnung erforderlichen Größen können vorteilhafterweise an einem frei gelagerten, unveränderten System ermittelt werden. Das FFM-Verfahren ist jedoch nur für stark gekoppelte Systeme mit einer geringen Schaufelzahl geeignet. Bei einer hohen Anzahl von Schaufeln treten innerhalb eines Frequenzbandes von wenigen Hertz entsprechend der Schaufelzahl Eigenformen auf, die einer hinreichend genauen Modentrennung entgegenstehen bzw. mit extrem aufwändigen Methoden separiert werden müssen.

Bei einem anderen bekannten verfahren zur Feststellung der Verstimmung von BLISKs bzw. zur Vorherbestimmung der Schaufelblattschwingungen einer BLISK während des Betriebes (Sever, I.A.; Experimental validation of Turbomachinery Blade Vibration Predictions, Ph.D.-thesis, University of London (Imperial College), 2004) werden die Scheibe zwischen massiven Stahlblöcken und zusätzlich auch die aktuell nicht gemessenen Schaufeln mit erheblichem Aufwand verspannt, um bei der Erregung und Schwingungsmessung die Kopplungseinflüsse zwischen den Schaufeln zu reduzieren und tatsächlich die Eigenfrequenz der betreffenden Schaufel messen zu können, Gemäß einer noch anderen Untersuchung zur Pestigkeitsauslegung von Schaufelscheiben (Beirow, B. u.a: Experimentelle und numerische untersuchungen hinsichtlich einer Festigkeitsauslegungsoptimierung von Hochdruckverdichterschaufelscheiben unter besonderer Berücksichtigung von Mistuningeffekten, DGLR-Kongress 2003, München 2003, ISSN 0700-4083) wird nur die Scheibe verspannt und die einzelnen schaufeln der BLISK werden nacheinander mittels Impulserregung erregt und simultan wird die Schwingungsantwort berührungslos gemessen. Auf diese weise ist es bei ganz oder teilweise entkoppelten Laufrädern in BLISK-Bauweise prinzipiell möglich, relative (bezogene) Mistuningverteilungen an BLISKs relativ gut zu identifizieren. Eindeutige, den tatsächlichen Verhältnissen während des Betriebs entsprechende Schwingungsantworten können jedoch aufgrund der nicht vollständigen Entkopplung nicht erzielt werden. Abgesehen davon, dass das verspannen einen erheblichen Aufwand erfordert, ist die Anwendung der zuvor erwähnten verfahren auch auf Laufräder beschränkt, die sich tatsächlich auch verspannen lassen, was aufgrund der Bliskgeometrie, beispielsweise bei einer hohen Schaufelzahl, oder bei eingebauten Laufrädern nicht immer gewährleistet ist.

Der Erfindung liegt die Aufgabe zugrunde, ein Verfahren der eingangs erwähnten Art zur Ermittlung der Schaufelverstimmung von in BLISK-Bauweise ausgebildeten Laufrädem anzugeben, das unabhängig vom Laufraddesign und auch im Einbauzustand des Laufrades mit geringem Aufwand eine ausreichende Entkopplung der jeweils untersuchten Schaufel von der Scheibe und den übrigen Schaufeln gewährleistet und dadurch eine eindeutige, wirklichkeitsnahe Schwingungsantwort der jeweils erregten Schaufel und letztlich eine eindeutige Aussage über die Schaufeleigenfrequenzverteilung und damit die Laufradverstimmung zulässt.

Erfindungsgemäß wird die Aufgabe mit einem verfahren gemäß den Merkmalen des Patentanspruchs 1 gelöst. Aus den Unteransprüchen ergeben sich weitere Merkmale und vorteilhafte Weiterbildungen der Erfindung.

Der Grundgedanke der Erfindung besteht mit anderen Worten darin, dass bei einem Verfahren gemäß dem oberbe-griff des Anspruchs 1 während der Messung der Schwingungsantwort an der jeweils erregten Schaufel alle übrigen - gerade nicht untersuchten - Schaufeln des in Integralbauweise gefertigten Laufrades mit Hilfe einer vorübergehend an jeder nicht untersuchten Schaufel angebrachten, identischen Zusatzmasse zusätzlich verstimmt werden. Dadurch wird die Schwingungsfrequenz der nicht untersuchten Schaufeln aus dem eigenfrequenznahen Bereich der Schaufeln verschoben, so dass die Schwingungsantwort der untersuchten Schaufel störende und verfälschende Kopplungseffekte im Wesentlichen verhindert werden. Die Eigenfrequenz der einzelnen Schaufeln und damit die Schaufeleigenfrequenzverteilung am Laufrad und die Verstimmung der Gesamtstruktur können damit realitätsnah bestimmt werden. Mit dem fertigungsbedingt unvermeidlichen Mistuning verbundene Amplituden- und Spannungserhöhungen im Betrieb können vorab erkannt werden, so dass verlässliche Aussagen zur Ermüdungsproblematik und Lebensdauer sowie zur Betriebssicherheit der BLISK getroffen werden können.

Gemäß einem in Anspruch 2 wiedergegebenen weiteren wichtigen Merkmal der Erfindung ist zur Erzielung der zusätzlichen Schaufelverstimmung eine bestimmte Zusatzmasse erforderlich, deren Größe von der Designschaufelmasse, der Designschaufelfrequenz der Schaufelmoden und der erwarteten Größenordnung der Schaufelverstimmung abhängt.

In weiterer Ausbildung der Erfindung werden aus den gemessenen Schwingungsantwortsignalen für jede Schaufel und Modenfamilie Übertragungsfunktionen ermittelt, aus denen die den jeweiligen Amplitudenmaxima zugeordneten Maximalfrequenzen herausgelesen werden. Aus diesen wird ein Mittelwert berechnet, der schließlich als Bezugsgröße zur Darstellung der Schaufeleigenfrequenzverteilung bzw. der Verstimmung des Laufrades dient.

In vorteilhafter Weiterbildung der Erfindung gemäß Anspruch 4 ist es möglich, die geringfügig zu klein berechneten Mittelwerte unter Verwendung eines Masse-FederDämpfer-Modells als äquivalentes Laufradmodell in Abhängigkeit von der Schaufelsteifigkeit und der Designschaufelmasse zu korrigieren.

In Ausgestaltung der Erfindung sind die Zusatzmassen als kleine Metallzylinder ausgebildet, die mit Hilfe von Bienenwachs jeweils an übereinstimmenden Stellen an den nicht untersuchten Schaufeln gehalten sind. Der Schlagimpuls zur Schaufelerregung wird jeweils an gleicher stelle und in gleichem Winkel mittels Miniaturhammer erzeugt.

Die Schwingungsantwort der erregten Schaufel wird berührungslos mittels Laservibrometrie erfasst.

Die Anwendung des Verfahrens erfolgt bei in BLISK-Bauweise hergestellten Verdichter- und Turbinenlaufrädern, insbesondere bei Kompressorlaufrädern von Fluggasturbinen, und zwar in ausgebauten Zustand bei quasi freier Lagerung des Laufrades oder auch in eingebautem Zustand.

Ein Ausführungsbeispiel der Erfindung wird anhand der Zeichnung näher erläutert. Es zeigen:

Fig. 1      eine schematische Darstellung einer Anordnung zur Ermittlung der Schaufelverstimmung bei einem als BLISK ausgebildeten Laufrad des Hochdruckverdichters einer Fluggasturbine;

Fig. 2      eine graphische Darstellung a) einer Übertragungsfunktion mit der Maximalamplitude für einen Teil der Schaufeln des Laufrades und b) einer anderen Darstellungsform der Übertragungsfunkfion für eine einzelne Schaufel mit der auf die Maximalamplitude einer Schaufel bezogenen Maximalfrequenz, und zwar bei einer nach dem Stand der Technik nicht ausreichend entkoppelten BLISK;

Fig. 3      eine graphische Darstellung der übertragungsfunktionen nach Fig. 2, jedoch bei erfindungsgemäß unter Verwendung von Zusatzmassen entkoppelten Schaufeln zur eindeutigen Identifizierung der jeweiligen Schaufeleigenfrequenz;

Fig. 4      ein äquvalentes Bliskmodell (ÄBM) zur optionalen Berechnung der Frequenzmittelwertkorrektur; und

Fig. 5      ein Blockdiagramm für die iterative Korrektur messtechnisch ermittelter Schaufelfrequenzverteilungen.

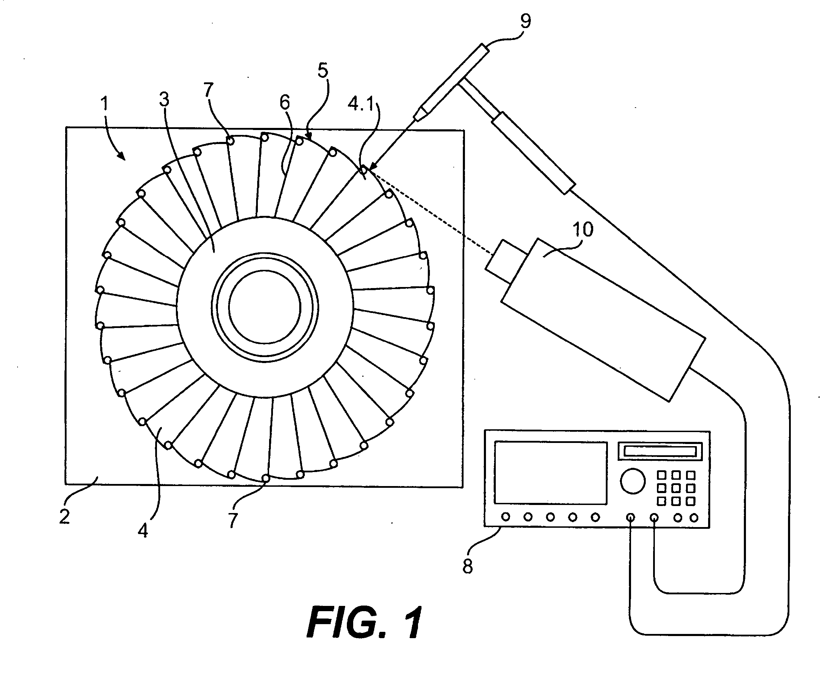

Wie Fig. 1 zeigt, ist das zu untersuchende, in Blisk-Bauweise ausgebildete Laufrad 1 auf einer Schaumstoffunterlage 2 quasi frei gelagert, Das Laufrad 1 umfasst eine Scheibe 3 mit an deren Außenumfang integral angeformten Schaufeln 4. Abgesehen von der gerade untersuchten Schaufel 4.1 sind an allen übrigen Schaufeln 4 an jeweils der gleichen Stelle, hier im Bereich der Schaufelspitze 5 und der Schaufelvorderkante 6, vorgegebene, identische Zusatzmassen 7 in Form kleiner Metallzylinder angebracht. Die jeweilige Zusatzmasse 7 ist an einer Stirnseite des Metallzylinders mittels eines leicht entfernbaren Haftmittels, hier Bienenwachs, an einer Seitenfläche der Schaufel gehalten, Die aktuell untersuchte Schaufel 4.1 wird mit einem an eine Kontrolleinheit 8 angeschlossenen Schlagmechanismus, hier in Form eines Impulshammers 9, durch einen Miniaturhammerschlagimpuls erregt. Die Schwingungsantwort der betreffenden Schaufel 4.1 wird von einer Messeinrichtung, hier einem mit der Kontrolleinheit 8 verbundenen Einpunkt-Laservibrometer 10, mittels Laser-Doppler-Vibrometrie berührungslos erfasst. Aufgrund der mit Hilfe der Zusatzmassen 7 bewirkten zusätzlichen Verstimmung der übrigen Schaufeln 4 werden von diesen infolge der bei einer BLISK ausgeprägten Schaufel-Scheibe-Kopplung ausgehende, störende Kopplungseffekte aus dem in der Nähe der zu messenden Schaufeleigenfrequenz liegenden interessierenden Frequenzbereich geschoben, so dass die Verstimmung der gerade untersuchten Schaufel 4.1 auf der Basis der ermittelten Schaufeleigenfrequenz ermittelt werden kann. In der gleichen Weise werden - jeweils ohne Zusatzmasse 7 - anschließend die übrigen Schaufeln 4 untersucht. Der Schlagimpuls wird immer an der gleichen Stelle und in gleichem Winkel sowie in der gleichen Größe auf die jeweils zu untersuchende Schaufel 4.1 ausgeübt.

Die Größe der Zusatzmasse $\Delta m(g)$ wird in Abhängigkeit von der Designschaufelmasse $m_b$ (g), der Designschaufeleigenfrequenz des i-ten Schaufelatodes $f_{0,1}$ (Hz) sowie der erwarteten Größenordnung der Schaufelverstimmung, das heißt des beitragsmäßigen Mistuningbereichs des i-ten Schaufelmodes $\Delta f_{spanne} = \Delta f_{max} + \Delta f_{min}$ (%) ermittelt, wobei $\Delta f_{max} = (f_{i,max} - f_{0,i})/f_{i,max}$ (%) der positive Maximalwert des Mistunings und $\Delta f_{min} = (f_{i,min} - f_{0,i})/f_{i,min}$ (%) der negative Minimalwert des Mistunings des jeweils i-ten Schaufelmodes sind, und errechnet sich aus

$$\Delta m > m_b \left[ \left[ \frac{1}{1 - \dfrac{\Delta f\big|_{Spanne} \div 100}{f_{0,i}}} \right]^2 - 1 \right]$$

Hierbei handelt es sich um eine auf der sicheren Seite liegende Abschätzung, da die effektiv mitschwingende Schaufelmasse einen im Vergleich zur tatsächlichen Designschaufelmasse $m_b$ kleineren Wert annimmt.

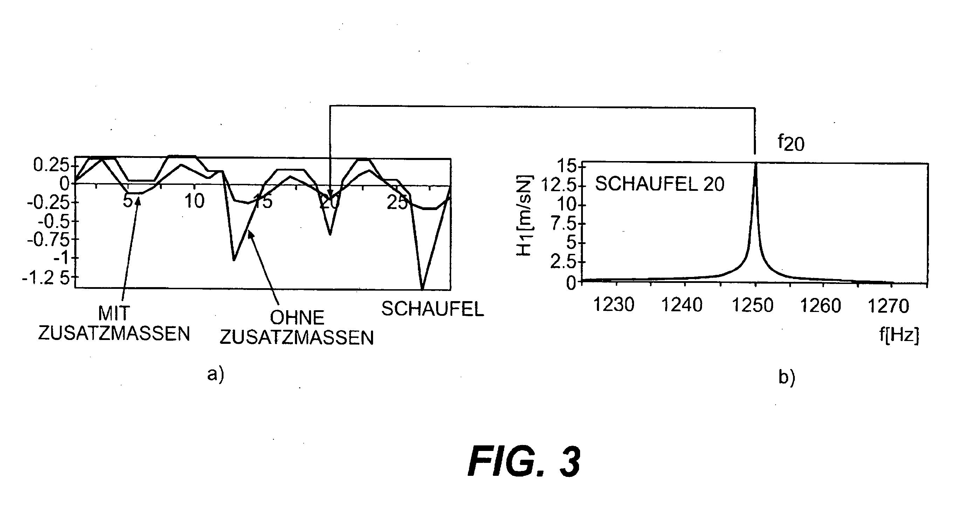

Aus den Krarteingangssignalen und den Schwingungsantwortsignalen wird jetzt für jede der beispielsweise 80 Schaufeln der BLISK 11 eines Hochdruckkompressors und jede Modefamilie (1, Biegung, 2. Biegung, 1. Torsion, 2. Torsion usw.) eine Übertragungsfunktion berechnet. Die den in den Übertragungsfunktionen H[m/s/N] aufgrund der Entkopplung der gerade gemessenen Schaufel von den anderen, mit Zusatzmassen versehenen Schaufeln jeweils isoliert auftretenden Amplitudenmaxima (Fig. 3b) zugeordneten Maximalfrequenzen $f_i$ werden als Eingangsgröße für die relative Schaufeleigenfrequenzverteilung $(f_i-f_{i,mittel})/f_{i,mittel}$ (Fig. 3b) benutzt. Mit der so für alle Modenfamilien ermittelten Schaufeleigenfrequenzverteilung der BLISK kann eine zuverlässige Aussage über die Schaufelverstimmung bzw. über das Schwingungsverhalten der Schaufele im Betrieb und letztlich über die Qualität und Lebensdauer der BLISK getroffen werden.

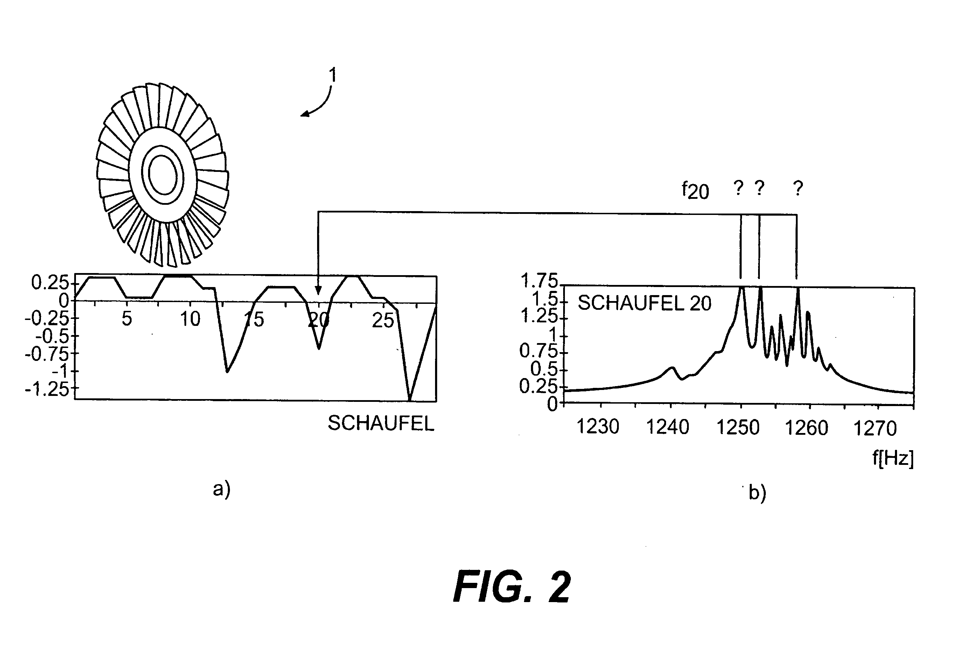

Fig. 2a zeigt zur Veranschaulichung der Nachteile des Standes der Technik die Übertragungsfunktion der Schwingungsantworten der BLISK-Schaufeln auf der Basis messtechnisch ermittelter Übertragungsfunktionen. Die Darstellung einer Übertragungsfunktion H[m/s/N] für das Amplitudenmaximum einer einzelnen Schaufel (Nr. 20) in Fig. 2b macht deutlich, dass die Schaufeleigenfrequenz aufgrund von Kopplungseffekten nicht eindeutig identifizierbar ist und eine zuverlässige Beurteilung der BLISK mithin nicht möglich ist. Hingegen ist die Schaufeleigenfrequenz unter Verwendung von Zusatzmassen 7 aufgrund eines dem jeweiligen Amplitudenmaximum (Fig. 3a) zugeordneten einzigen Frequenzmaximums (Fig. 3b) bei der Schaufel Nr. 20 eindeutig identifizierbar. Die mit dem zuvor beschriebenen Verfahren ermittelten Schaufelfrequenzverteilungen können für den Abgleich eines finite Elemente Modells und somit für die Berechnung erzwungener Schwingungsantworten herangezogen werden, die letztlich die maßgebliche Information für eine optimale Dehnmessstreifenpositionierung liefern.

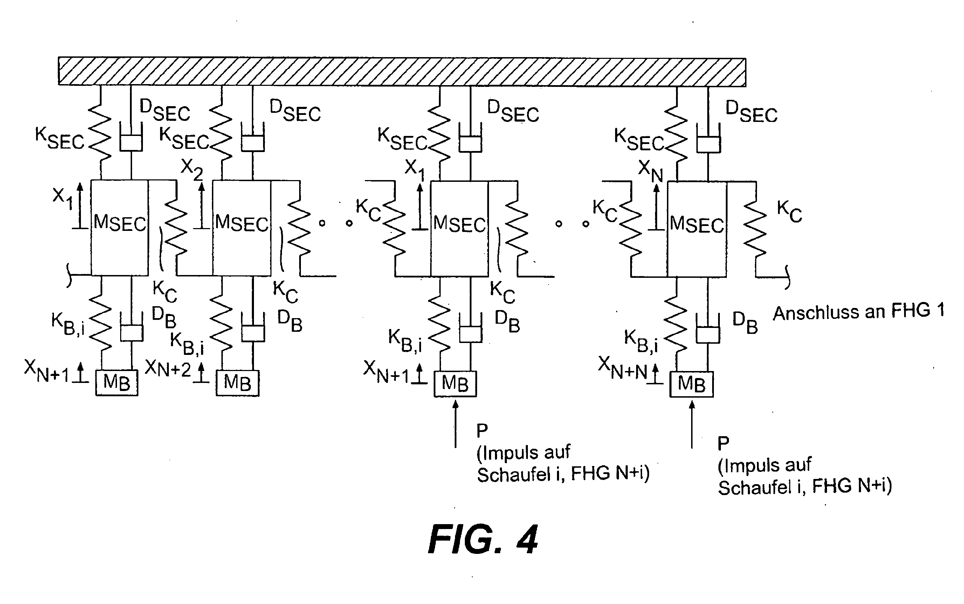

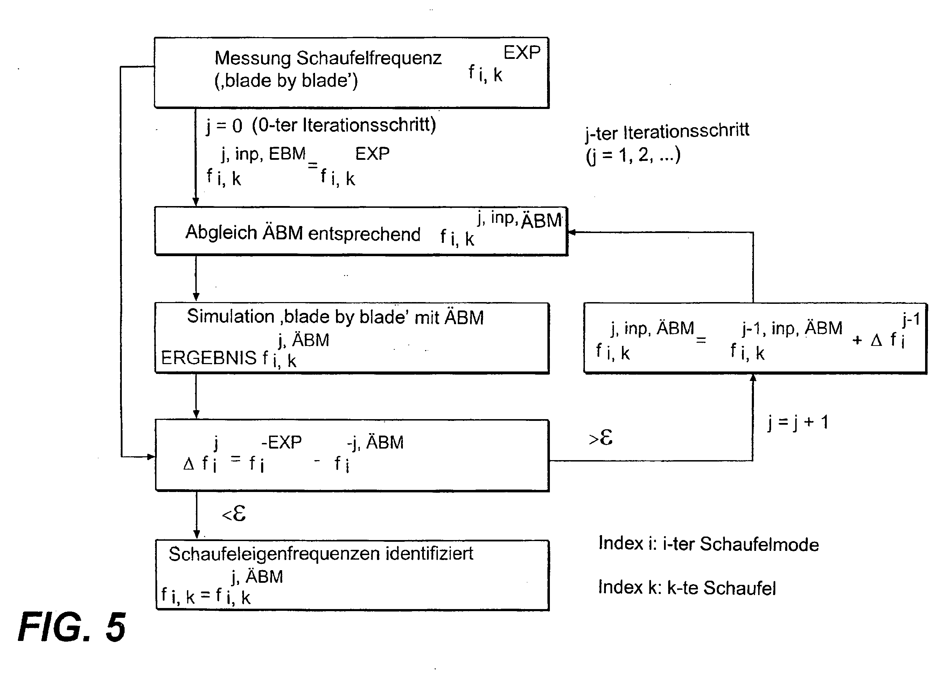

Da die oben für die Darstellung der bezogenen Schaufelfrequenzverteilung errechneten Mittelwerte $f_{i,mittel}$ aufgrund unvermeidbarer Kopplungen und der eingesetzten Zusatzmassen geringfügig zu klein berechnet werden, kann die Schaufeleigenschwingungsverteilung durch Korrektur des Mittelwertes mit Hilfe eines Masse-Feder-Dämpfer-Modells (Beirow, B. u.a. Lokalisierungsphänomen bei Hochdruckverdichterschaufelscheiben, VDI-Berichte Nr. 168, 2006, ISBN 3-18-091968-X) noch genauer wiedergegeben werden. Ein derartiges äquivalentes Bliskmodell (ÄBM) ist in Fig. 4 wiedergegeben. Die für die Korrektur notwendige Information wird mit Hilfe eines numerischen Experiments gewonnen. Hierzu wird die messtechnisch ermittelte Frequenzverteilung dem Modell über eine zum Beispiel in einem FORTRAN-Code automatisierte Anpassung der Schaufelsteifigkeiten $k_{b,i}$ vorgegeben und die Impulserregung aus der Messung simuliert. Die mit Hilfe eines Zeitschrittintegrationsverfahrens ermittelte Verteilung wird im Mittel unterhalb der Messvorgabe liegen, so dass eine iterative Erhöhung der Schaufelsteifigkeit gemäß Fig. 5 solange erfolgen muss, bis die messtechnisch ermittelten Frequenzen erreicht werden. Der in Fig. 5 dargestellte Iterationsprozess kann zur Verringerung der Rechenzeit punktuell an einer oder wenigen Schaufeln erfolgen.

Die auf diese Weise angepasste Verteilung der Schaufelsteifigkeiten $k_{b,i}$ definiert zusammen mit der bekannten Designschaufelmasse $m_b$ die Schaufeleigenfrequenzverteilung der BLISK bezüglich der untersuchten Modenfamilie über

$$f_{b,i} = \frac{1}{2\pi}\sqrt{\frac{k_{b,i}}{m_b}},$$

die gleichzeitig der Modellvorgabe des letzten Iterationsschrittes entspricht. Mit der so ermittelten absoluten Schaufeleigenfrequenzverteilung ist die Schaufelverstimmung hinreichend genau beschrieben.

**Bezugszeichenliste**

| | |
|---|---|
| 1 | Laufrad |
| 2 | Schaumstoffunterlage |
| 3 | Scheibe |
| 4 | Schaufeln mit Zusatzmasse |
| 4.1 | Schaufel ohne Zusatzmasse |
| 5 | Schaufelspitze |
| 6 | Schaufelvorderkante |
| 7 | Zusatzmasse |
| 8 | Kontrolleinheit |
| 9 | Impulshammer |
| 10 | Einpunkt-Laservibrometer |
| $\Delta m$ | Größe der Zusatzmasse |
| $m_b$ | Designschaufelmasse |
| $f_{0,i}$ | Designschaufeleigenfrequenz |
| $\Delta f_{spanne}$ | erwartete Schaufelverstimmung |
| $f_{i,max}$ | positiver Maximalwert des Mistuning |
| $f_{i,min}$ | negativer Minimalwert des Mistuning |
| $k_{b,i}$ | Schaufelsteifigkeit |

**Patentansprüche**

1. Verfahren zur Ermittlung der Schaufelverstimmung bei in Integralbauweise hergestellten Laufrädern für Verdichter und Turbinen, insbesondere für Gasturbinentriebwerke, bei dem die einzelnen Schaufeln nacheinander in jeweils von den übrigen Schaufeln weitgehend entkoppeltem Zustand durch einen Impuls erregt und dabei die Schwingungsanwort der erregten Schaufel als Ausgangswert zur Berechnung der Verstimmung gemessen wird, **dadurch gekennzeichnet, dass** die nicht untersuchten Schaufeln mittels einer an diesen temporär angebrachten, jeweils identischen Zusatzmasse zusätzlich so verstimmt werden, dass von diesen ausgehende, die Messung der Schwingungsantwort der untersuchten Schaufel störende Kopplungseffekte aus dem schaufeleigenfrequenznahen Frequenzbereich verschoben und dadurch eliminiert werden.

2. Verfahren nach Anspruch 1, **dadurch gekennzeichnet, dass** die Größe der Zusatzmasse (•m) in Abhängigkeit von der Designschaufelmasse ($m_b$), der Designschaufeleigenfrequenz des i-ten Schaufelmodes ($f_{0,i}$) sowie der erwarteten Größenordnung der Schaufelverstimmung (•$f_{spanne}$) entsprechend

$$\Delta m > m_b \left[ \left[ \frac{1}{1 - \frac{\left| \Delta f \right|_{Spanne} \div 100}{f_{0,i}}} \right]^2 - 1 \right]$$

ermittelt wird.

3. Verfahren nach Anspruch 1, **dadurch gekennzeichnet, dass** aus den für jede Schaufel und Modenfamilie messtechnisch ermittelten Übertragungsfunktionen die den entsprechenden Amplitudenmaxima zugeordneten Maximalfrequenzen (fi) ermittelt und als Eingangsgröße für die relative Schaufelfrequenzverteilung $(f_i - f_{i,mittel})/f_{i,mittel}$ des Laufrades verwendet werden.

4. Verfahren nach Anspruch 3, dass die zur Aufstellung der Schaufelfrequenzverteilung geringfügig zu klein berechneten Mittelwerte $(f_{i,mittel})$ mit Hilfe eines als äquivalentes Bliskmodell (ÄBM) dienenden Masse-Feder-Dämpfer-Modells korrigiert wird, wobei die messtechnisch ermittelte Frequenzverteilung dem äquivalenten Bliskmodell über eine automatisierte Anpassung der Schaufelsteifigkeiten $(k_{b,i})$ vorgegeben und dabei die Impulserregung aus der Messung simuliert wird, und wobei sich die absolute Schaufeleigenfrequenzverteilung zur Bestimmung der Schaufelverstimmung der BLISK in Abhängigkeit von den Schaufelsteifigkeiten $(k_{b,i})$ und der Designmasse $(m_b)$ aus

$$f_{b,i} = \frac{1}{2\pi} \sqrt{\frac{k_{b,i}}{m_b}}$$

ergibt.

5. Verfahren nach Anspruch 1, **dadurch gekennzeichnet, dass** die Zusatzmassen als kleine Metallzylinder ausgebildet sind, die jeweils an demselben Ort mit Hilfe eines Haftmittels an den nicht untersuchten Schaufeln gehalten sind.

6. Verfahren nach Anspruch 5, **dadurch gekennzeichnet, dass** als Haftmittel ein Bienenwachs verwendet wird.

7. Verfahren nach Anspruch 1, **dadurch gekennzeichnet, dass** die Schaufelerregung über einen Miniaturhammerschlagimpuls erfolgt und die Schwingungsantwort berührungslos mittels Laser-Doppler-Vibrometrie erfasst wird.

8. Verfahren nach Anspruch 7, **dadurch gekennzeichnet, dass** der Schlagimpuls an den Schaufeln jeweils an derselben Stelle und im gleichen Winkel ausgeübt wird.

9. Verfahren nach Anspruch 1, **dadurch gekennzeichnet, dass** das zu untersuchende Laufrad in ausgebautem Zustand quasi frei gelagert wird.

10. Verfahren nach Anspruch 1, **dadurch gekennzeichnet, dass** das betreffende Laufrad im Einbauzustand untersucht wird.

**Claims**

1. Method for determining blade mistuning on integrally manufactured rotor wheels for compressors and turbines, in particular for gas-turbine engines, in which the individual blades are pulse-excited one after the other in a condition largely decoupled from the other blades, with the vibratory response of the excited blade being measured as initial value for mistuning calculation, **characterized in that** the blades not under investigation are additionally mistuned by temporarily applying an identical extra mass to each of them, such that coupling effects originating from these blades and disturbing measurement of the vibratory response of the blade under examination are shifted away from the natural frequency-near range of the blades and hence eliminated.

2. Method in accordance with Claim 1, **characterized in that** the size of the extra mass ($\Delta m$) is determined depending on the design blade mass ($m_b$), the design blade natural frequency of the $i^{th}$ blade mode ($f_{0,i}$) as well as the expected magnitude of blade mistuning ($\Delta f_{span}$) as per:

$$\Delta m > m_b \left[ \left[ \frac{1}{1 - \frac{\left| \Delta f \right|_{span} \div 100}{f_{0.i}}} \right]^2 - 1 \right]$$

3. Method in accordance with Claim 1, **characterized in that** from the transfer functions determined by measurement for each blade and family of modes the maximum frequencies (fi) referred to the respective amplitude maxima are established and used as input value for the relative blade frequency distribution ($(f_i - f_{i,mean})/f_{i,mean}$) of the rotor wheel.

4. Method in accordance with Claim 3, **characterized in that** the average values ($f_{i,mean}$) for the representation of the blade frequency distribution, which are calculated slightly too small, are corrected by means of a mass-spring-damper-model serving as equivalent blisk model (EBM), with the frequency distribution determined by measurement being specified via an automated adaptation of the blade stiffnesses ($k_{b,i}$) to the equivalent blisk model thereby simulating pulse excitation from the measurement, and with the absolute blade natural frequency distribution for the determination of blade mistuning of the blisk in dependence of blade stiffnesses ($k_{b,i}$) and design mass ($m_b$) resulting from:

$$f_{b,i} = \frac{1}{2\pi} \sqrt{\frac{k_{b,i}}{m_b}}$$

5. Method in accordance with Claim 1, **characterized in that** the extra masses are provided as small metallic cylinders, fixed by means of a bonding agent in each case at the same location on the blades which are not under investigation.

6. Method in accordance with Claim 5, **characterized in that** beeswax is used as bonding agent.

7. Method in accordance with Claim 1, **characterized in that** the impact pulse for blade excitation is produced using a miniature hammer and **in that** the vibratory response is recorded contactless by laser Doppler vibrometry.

8. Method in accordance with Claim 7, **characterized in that** the impact pulse on the blades is in each case produced at the same location and under the same angle.

9. Method in accordance with Claim 1, **characterized in that** the rotor wheel to be examined is borne in the removed state in virtually free condition.

10. Method in accordance with Claim 1, **characterized in that** the respective rotor wheel is examined in the installed condition.

**Revendications**

1. Procédé destiné à déterminer le désaccordage d'aube dans des roues de rotors de construction monobloc pour compresseurs et turbines, en particulier pour moteurs à turbine à gaz, dans lequel les aubes individuelles - chaque aube étant largement découplée des autres aubes - sont excitées, l'une après l'autre, par une impulsion et la réponse vibratoire de l'aube excitée est mesurée en tant que valeur initiale pour le calcul du désaccordage, **caractérisé en ce que** les aubes non examinées sont en outre désaccordées au moyen d'une masse additionnelle toujours identique appliquée temporairement sur elles de manière telle que les effets de couplage qui en émanent et perturbent la mesure de la réponse vibratoire de l'aube examinée sont décalés hors de la gamme des fréquences proches de la fréquence propre, et de ce fait éliminés.

2. Procédé selon la revendication n° 1, **caractérisé en ce que** la taille de la masse additionnelle ($\Delta m$) est déterminée en fonction de la masse d'aube de conception ($m_b$), de la fréquence propre d'aube de conception de l'i-ème mode d'aube ($f_{0,i}$) ainsi que de l'ordre de grandeur escompté du désaccordage d'aube ($\Delta f_{span}$) selon la formule:

$$\Delta m > m_b \left[ \left[ \frac{1}{1 - \frac{\left| \Delta f \right|_{span} \div 100}{f_{0.i}}} \right]^2 - 1 \right]$$

3. Procédé selon la revendication n° 1, **caractérisé en ce qu'**à partir des fonctions de transmission déterminées par mesurage pour chaque aube et famille de modes, les fréquences maximales (fi) associées aux maximums d'amplitude correspondants sont déterminées et utilisées en tant que grandeur d'entrée pour la distribution relative des fréquences d'aube ($f_i$-$f_{i,moyen}$)/$f_{i,moyen}$) de la roue du rotor.

4. Procédé selon la revendication n° 3, **caractérisé en ce que** les valeurs moyennes ($f_{i,moyen}$) calculées légèrement trop faibles pour établir la distribution des fréquences d'aube sont corrigées à l'aide d'un modèle masse-ressort-amortisseur servant de modèle équivalent de BLISK (EBM), sachant que la distribution des fréquences déterminée par mesurage est affectée au modèle équivalent de BLISK par une adaptation automatisée des rigidités d'aube ($k_{b,i}$) et que l'excitation par impulsion est simulée à partir de la mesure, et que la distribution absolue des fréquences propres d'aube pour déterminer le désaccordage d'aube du BLISK en fonction des rigidités d'aube ($k_{b,i}$) et de la masse de conception ($m_b$) résulte de :

$$f_{b,i} = \frac{1}{2\pi} \sqrt{\frac{k_{b,i}}{m_b}}$$

5. Procédé selon la revendication n° 1, **caractérisé en ce que** les masses additionnelles sont conçues en tant que petits cylindres métalliques qui sont maintenus toujours au même endroit sur les aubes non examinées à l'aide d'un agent adhésif.

6. Procédé selon la revendication n° 5, **caractérisé en ce qu'**une cire d'abeille est utilisée en tant qu'agent adhésif.

7. Procédé selon la revendication n° 1, **caractérisé en ce que** l'excitation des aubes est effectuée par une impulsion de percussion par marteau miniature et la réponse vibratoire est saisie sans contact par vibrométrie Doppler laser.

8. Procédé selon la revendication n° 7, **caractérisé en ce que** l'impulsion de percussion est exercée sur les aubes toujours au même endroit et sous le même angle.

9. Procédé selon la revendication n° 1, **caractérisé en ce que** la roue du rotor à examiner est logée quasiment librement à l'état démonté.

**10.** Procédé selon la revendication n° 1, **caractérisé en ce que** la roue du rotor concernée est examinée à l'état monté.

**FIG. 1**

EP 1 988 391 B1

FIG. 2

EP 1 988 391 B1

a)

b)

MIT
ZUSATZMASSEN

OHNE
ZUSATZMASSEN

SCHAUFEL

SCHAUFEL 20

f20

**FIG. 3**

EP 1 988 391 B1

**FIG. 4**

EP 1 988 391 B1

Messung Schaufelfrequenz (,blade by blade') $f_{i,k}^{EXP}$

j = 0 (0-ter Iterationsschritt) $f_{i,k}^{j, inp, EBM} = f_{i,k}^{EXP}$

Abgleich ÄBM entsprechend $f_{i,k}^{j, inp, ÄBM}$

Simulation ,blade by blade' mit ÄBM ERGEBNIS $f_{i,k}^{j, ÄBM}$

$\Delta f_i^{j} = f_i^{-EXP} - f_i^{-j, ÄBM}$

$< \varepsilon$

Schaufeleigenfrequenzen identifiziert $f_{i,k} = f_{i,k}^{j, ÄBM}$

j-ter Iterationsschritt (j = 1, 2, ...)

$f_{i,k}^{j, inp, ÄBM} = f_{i,k}^{j-1, inp, ÄBM} + \Delta f_i^{j-1}$

j = j + 1

$> \varepsilon$

Index i: i-ter Schaufelmode

Index k: k-te Schaufel

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7082371 B2

**In der Beschreibung aufgeführte Nicht-Patentliteratur**

- **SEVER, I.A.** Experimental validation of Turbomachinery Blade Vibration Predictions. *Ph.D.-thesis,* 2004
- **VON MISTUNINGEFFEKTEN.** *DGLR-Kongress,* 2003, ISSN 0700-4083

- **BEIROW, B.** *Lokalisierungsphänomen bei Hochdruckverdichterschaufelscheiben,* 2006, ISBN 3-18-091968-X